# EUROPEAN PATENT APPLICATION

(11) **EP 3 874 950 A1**
(43) Date of publication of application: **08.09.2021**
(21) Application number: 20161329.6
(22) Date of filing: 05.03.2020
(51) Int. Cl.: A01N 37/44, A01N 25/00, A01P 7/04

(54) **USE OF DENATONIUM BENZOATE AS A SEED TREATMENT FOR CROPS AS INSECT REPELLENT**

(71) Applicant: KWS SAAT SE & Co. KGaA, 37574 Einbeck (DE)
(72) Inventor: Holzfuß, Constanze, 34212 Melsungen (DE); Wielandt, Nicolas, 37574 Einbeck (DE)

(57) **Abstract**

The present invention relates to the protection of seed and plants from damage caused by insects. Treatment with denatonium benzoate provides seeds which are protected against insects, especially wireworms.

## Description

The present invention relates to the protection of seed and plants from damage caused by insects. Treatment with denatonium benzoate provides seeds which are protected against insects, especially wireworms.

A pest for seeds are insects and insect larvae, which also frequently cause damage due to feeding on seed. Examples of such insect pests are wireworms. Wireworms are the larvae of click beetles (Coleoptera: Elateridae). They consist of more than 9,000 species distributed worldwide, and some are important pests of a wide variety of crops, such as corn, potato, cereals, carrot, sugar beet, sugarcane and soft fruits. In Europe, damages due to wireworm infestation are mainly attributed to the genus *Agriotes* Eschscholtz. It comprises more than 200 species worldwide, including more than 100 in the Palearctic region. *Agriotes* communities were widely distributed across the continent. The genus *Melanotus* Eschscholtz is well studied in Japan (*Melanotus okinawensis* Ohira) and in the USA (*Melanotus communis* (Gyll.)). The "Pacific coast" wireworm, *Limonius canus* Leconte, is responsible, with other species of the genus, for crop damage alongside the western coast of North America. Other genera important for their impact on agriculture are *Athous* Eschscholtz, *Conoderus* Eschscholtz, *Ctenicera* Latreille and *Hypolithus* Eschscholtz.

The main effects of wireworm feeding on neck and belowground plant organs are seedling mortality and all implied yield losses. Wireworm larvae may feed for instance on the germ of corn kernels or completely hollow out the seeds, leaving only the seed coat. This damage results in gaps in the rows. Wireworms may also cut off small roots or tunnel into the underground portions of the root or stem of young corn plants. These plants will appear stunted or wilted with the whorl leaves wilting first.

Wireworm damage occurs mainly during the early stages of plant growth. Damage commonly occurs when crop plant is planted early and the weather turns cold, slowing seed germination. Wireworm infestations are usually noted in areas of a field that stay moist for long periods of time.

Wireworms are often not very specific to certain crops, e.g., corn wireworms also attack carrots (*Daucus carota*), cucurbits, rutabagas (*Brassica napus*), onions (*Allium cepa*), sugar beets (*Beta vulgaris*), beans (*Phaseolus vulgaris*), soybeans (*Glycine max*), peas (*Pisum sativum*), peppers (*Capsicum* spp.) and celery (*Apium graveolens*) (Bessin and Townsend 2004, Chaput 2011, Wilson 1940). Other wireworms attack amongst above crops also cabbage, sugarcane (*Saccharum officinarum*), potatoes (*Solanum tuberosum*), sweet potatoes (*Ipomoea batatas*), wheat (*Triticum aestivum*), sorghum (*Sorghum bicolor*), grasses, small grain crops, flower and vegetable crops (Sorensen and Baker 1994).

Wireworm management in corn and other crops is generally by seed treatment or treatment at the time of planting. Cultural practices - like crop rotation, flooding, or cultivation - are generally ineffective because wireworms have a wide host range and are adaptable to different environments. Delaying planting to allow soils to dry and warm may improve crop emergence because wireworms retreat deeper in the soil under these conditions, but this is a management practice that may not always be possible.

Many insecticides that are commonly used to protect seeds have the disadvantage that they are also dangerous for non-target insects, in particular honey bees. Information from standard tests and field studies, as well as incident reports involving neonicotinoid insecticides (e.g., clothianidin) suggest the potential for long term toxic risk to honey bees and other beneficial insects.

Thus, it was the problem underlying the present invention to provide a seed treatment which is suitable for protecting seed from damage caused by insects, in particular caused by wireworms, preferably without impairing germination ability of the seeds. Compromising germination and quality of seed can lead to significantly lower yields. Particularly desirable in this context would be substances that protect seed and seedlings, but are safe for consumption of the plants and preferably longer detectable in the mature plant.

One substance that has often been suggested as mammals repellent is denatonium benzoate (N-Benzyl-2-(2,6-dimethylanilino)-N,N-diethyl-2-oxoethan-1-aminium benzoate, Bitrex), which is a bittering agent in the prevention of accidental poisoning of e.g. children (Sibert & Frude (1991). Emergency Medicine Journal, 8(1), 1-7.). However, about the effect of DNB on insects, in particular pest of crops, is less or even nothing known. For example, in toxic baits for control of ants denatonium benzoate is used as a bittering agent in the prevention of accidental poisoning of e.g. children or mammalian pets. Thus there is no repellent effect on the ants.

In the present invention, however, it was surprisingly found that denatonium benzoate offers excellent protection for seeds against damage caused by insects and insect larvae, I particular wireworms. The activity of denatonium benzoate as insect repellent was acceptable and up to a level comparable with standard insecticides like tefluthrin, and clothianidin. Furthermore, it is favourable in that it is harmless to many beneficial insects.

In addition, it was found that denatonium benzoate may have a systemic effect on plants. This results in protection of the seed but also the emerged young seedlings. Since the denatonium benzoate is diluted over the time of growing and ripening, the harvested crop, e.g. the cobs of corn, do not show amounts of denatonium which affect the post-harvest usage, e.g. for animal feeding, silage purposes or human consumption. Further, it was found that treatment with denatonium benzoate is safe on the seed and there is no degradation of germination or quality of the seed.

Thus, in a first aspect the present invention provides a seed treated with denatonium benzoate, wherein the denatonium benzoate is adsorbed on the seed and/or absorbed into the seed. Hence, denatonium benzoate may be present on the surface of the seed, inside the seed or at both locations. If denatonium benzoate is present on the surface of the seed the wording *"the seed is coated with denatonium benzoate"* is used alternatively in the present application. The term *"coated"* does not mean, however, that the seed is completely covered by denatonium benzoate but refers to the fact that denatonium benzoate adheres to at least part of the surface of the seed.

According to a preferred embodiment of the invention, denatonium benzoate is at least partially absorbed into the seed. Denatonium benzoate is thus, at least partially, taken up by the seed but can also remain partially on the outside. The absorption of denatonium benzoate into the seed prevents the active agent from being washed off the surface of the seed, for example by rain, or rubbed off mechanically and allows the insect repellent activity to be maintained.

According to the invention, denatonium benzoate can be used as a single active agent or optionally in combination with one or more further active agents and/or additives. One or more active agents that can be employed may be any agent, preferably a chemical agent that produces a desired effect on the seed, the plant that ultimately emerges from the seed, or both. Non-limiting examples of such chemical agents include pesticides (such as fungicides, acaricides, miticides, insecticides, insect repellents, rodenticides, molluscicides, nematicides, bactericides, and fumigants), herbicides, chemical hybridizing agents, auxins, antibiotics and other drugs, biological attractants, growth regulators, pheromones and dyes. Specific non-limiting examples of chemical agents useful as active ingredients include triticonazole, imidacloprid, tefluthrin, and silthiophenamide (N-allyl-4,5-dimethyl-2-trimethylsilylthiophene-3-caboxamide). Further active agents suitable for use in the present invention are, for example, phytochemicals and antimicrobial agents suitable to protect seed. Preferred examples thereof are bactericides, antiparasitics and fungicides such as DSM RD9103 BRP, chili extract, black cumin oil, yucca extract, mentha pulegium extract, aluminium ammonium sulfate, hops extract, fat encapsulated plant extracts, alginate encapsulated plant extracts, tefluthrin, yellow colour substance, SatecWFO20, metalaxyl, fludioxonil, prothioconazole, and combinations thereof, preferably Redigo M and/or Maxim XL.

Potential additives may be sticking agents that improve adhesion of denatonium benzoate to a seed. Particularly preferred are sticking agents that are non-hazardous, preferably water-based sticking agents such as Sepiret®, Peridiam® Quality or Peridiam® Active and others. Further exemplary additives are fillers or bulking agents, and binders. Additionally, a talc or graphite powder can be added to keep the seeds from clumping.

A seed according to the present invention preferably contains denatonium benzoate in an amount effective to repel insects and insect larvae and thus provide protection against damage caused by insects. In particular, insects and insect larvae such as wireworms are repelled, but not affected in terms of health. The denatonium benzoate is also not harmful to the health of other animals that may come into contact with the seeds according to the invention.

For the purposes of the invention, the term *"insects"* shall in principle encompass all types of insects in any stage of development, including adults and larvae. Advantageously, harmful insects such as wireworms are repelled and thus prevented from feeding on the seed or developing plant parts. Thus, preferably the term insect means wireworm(s).

According to the invention, wireworms means the larvae of click beetle belonging to insects in the family Elateridae. Other names for click beetle include elaters, snapping beetles, spring beetles or skipjacks. There are about 9300 known species worldwide, and 965 valid species in North America. Wireworms as used herein are agricultural pests. Larvae are elongate, cylindrical or somewhat flattened, with hard bodies. The three pairs of legs on the thoracic segments are short and the last abdominal segment is, as is frequently the case in beetle larvae, directed downwards and may serve as a terminal proleg in some species. The ninth segment, the rearmost, is pointed in larvae of *Agriotes, Dalopius* and *Melanotus,* but is bifid due to a so-called caudal notch in *Selatosomus* (formerly *Ctenicera*), *Limonius, Hypnoides* and *Athous* species. The dorsum of the ninth abdominal segment may also have sharp processes, such as in the Oestodini, including the genera *Drapetes* and Oestodes. Although some species complete their development in one year (e.g. *Conoderus*), most wireworms spend three or four years in the soil, feeding on decaying vegetation and the roots of plants, and often causing damage to agricultural crops such as potato, strawberry, corn, and wheat. According to the present invention the term wireworm may be understood as larvae of click beetle belonging to a genus selected from the group consisting of *Agriotes, Dalopius, Melanotus, Selatosomus, Limonius, Hypnoides, Hypolithus, Athous, Drapetes, Oestodes* or *Conoderus.*

A further advantage of the seed according to the present invention, which has been treated with denatonium benzoate, is that the germination capacity of the seed is essentially the same as for untreated seed of the same species or the same genotype. Healthy growing seedlings and plants develop from seeds according to the invention to preferably at least the same extent as from untreated seeds.

As used herein, a seed, a plant or a part thereof may be derived from any plant species, preferably the a seed, a plant or a part thereof belongs to a species selected from the group consisting of carrot (*Daucus carota*), cucumber (*Cucumis sativus*), *Cucurbita argyrosperma, Cucurbita ficifolia, Cucurbita maxima, Cucurbita moschata,* watermelon (*Citrullus lanatus*), *Cucurbita pepo,* strawberry (*Fragaria* × *ananassa*), rutabagas (*Brassica napus*), rape seed (*Brassica oleracea*), onions (*Allium cepa*), sugar beets, swiss chard or red beet (*Beta vulgaris*), beans (*Phaseolus vulgaris*), soybeans (*Glycine max*), peas (*Pisum sativum*), peppers (*Capsicum* spp.), spinach (*Spinacia oleracea*), celery (*Apium graveolens*), cabbage, sugarcane (*Saccharum officinarum*), potato (*Solanum tuberosum*), tomato (*Solanum lycopersicum*), sweet potatoes (*Ipomoea batatas*), wheat (*Triticum aestivum*), sorghum (*Sorghum bicolor*), corn (*Zea mays*), barley (*Hordeum vulgare*) or rye (*Secale cereale*).

A further aspect of the present invention is a plant or a part thereof grown from the seed according to the invention. Since denatonium benzoate surprisingly has systemic effects and may, at least partly, be absorbed into the seed, it is still present in emerged young seedlings. The concentration in seedlings is usually lower than in the seed from which the seedling is grown. Since the denatonium benzoate is diluted over the time of growing and ripening, the harvested crop, e.g. the cobs, leaves, roots, tubers or any fruit, do not show amounts of denatonium which affect the post-harvest usage of the crop, e.g. for animal feeding, silage purposes or human consumption.

In plants developed/grown from seed(s) according to the invention, denatonium benzoate shows concentration differences between different plant sections/organs and development stadiums. Exemplary for corn, in early stage denatonium benzoate is selectively detectable. The concentration in the complete plant is usually in the lower ppm range and in sprouts in the upper ppb range. In middle-aged corn plants the concentration in leaves is in the lower ppb range. In general variation in concentration differs between type (Inter) and plant (Intra) and concentration of denatonium benzoate decrease from early stage to mid stage significantly.

In a particular embodiment of the invention the plant is a seedling and contains denatonium benzoate in a mean concentration of 1 to 50 ppm, preferably 5 to 30 ppm, more preferably 10 to 22 ppm, in the entire seedling. A further embodiment is a seedling containing denatonium benzoate in a mean concentration of 50 to 2500 ppb, preferably 100 to 1500 ppb, more preferably 200 to 800 ppb, in sprout tissue of the seedling. A still further embodiment is a plant in a middle-aged stage (for corn, e.g. the development stage is V6-V8) containing denatonium benzoate in a mean concentration of 0.5 to 100 ppb, preferably 1 to 50 ppb, more preferably 5 to 20 ppb, in leaf tissue of the plant. The amounts of denatonium benzoate in the developing plants are still sufficient to repel insects, in particular wireworms.

In another particular embodiment of the invention the plant is a seedling and contains denatonium benzoate in a mean amount of 1 to 40 µg per plant, preferably 2 to 25 µg per plant, more preferably 5 to 15 µg per entire plant. A further embodiment is a seedling containing denatonium benzoate in a mean amount of 0.01 to 0.5 µg per sprout of the seedling, preferably 0.03 to 0.3 µg per sprout of the seedling, more preferably 0.05 to 0.2 µg per sprout of the seedling. The amounts of denatonium benzoate in the developing plants are still sufficient to repel insects, in particular wireworms.

As used herein, middle-aged development stage of a plant means a development stage after germination and seed emergence but before ripening and harvesting. Preferably, at this stage the plant contains six to eight fully emerged leaves. More preferably, the reproductive stage in the plant begins. The reproductive stage of development in plants occurs after the juvenile stage is completed. At this stage the plants are considered mature, that is, they are physiologically capable of commencing the production of reproductive parts: the flowers, fruits and seeds. This stage consists of the period from the time that the plant starts to form inflorescence or flower primordia until flowering, pollination, and fertilization.

In addition to denatonium benzoate, the plant or parts thereof according to the invention may additionally contain one or more further active agents and/or additives. These additional active agents and/or additives are preferably those mentioned above in the context of seed. Depending on the extent to which these further active agents and/or additives are absorbed by the seed, their concentration in a plant or part thereof may vary. Active agents and additives that are not or only to a small amount absorbed by the seed may still be present on the surface of a plant or parts thereof.

A further aspect of the present invention is the use of denatonium benzoate for protecting a seed or a plant, preferably a seedling, from damage caused by insects. For this purpose, denatonium benzoate can optionally be combined with one or more further agents and/or additives, preferably those defined above with reference to a seed according to the invention. In principle, denatonium benzoate can be applied to the seed or plant or can be applied together with the seed during sowing on agricultural area. Pre-treatment of the seed is preferred, as the required amount of denatonium benzoate is then significantly lower than if it was only applied during sowing.

Furthermore, the present invention refers to a method of protecting a seed against damage caused by insects, the method comprising contacting the seed with denatonium benzoate. Optionally, denatonium benzoate can be combined with one or more further active agents and/or additives as described hereinabove.

*"Contacting"* as used in the present invention means that a seed is somehow brought into contact with denatonium benzoate. The contacting may result in a more or less continuous coating of the seed. In terms of the invention, coating does not necessarily mean that the seed surface is completely coated with denatonium benzoate, but includes any kind of adhesion of denatonium benzoate to any part of the seed surface. There does not necessarily have to be direct contact between denatonium benzoate and the seed surface, but adhesion can in principle also occur via any intermediate layers or substances.

Any method known in the art can be used for contacting seed with denatonium benzoate in order to apply the active agent to the seed. Exemplary techniques suitable to effectively apply the denatonium benzoate uniformly over the seed surface and uniformly from seed-to-seed are pelleting and film coating methods. Pelleting is defined as the deposition of a layer of inert materials that may obscure the original shape and size of the seed, resulting in a substantial weight increase and improved plantability. Film coating retains the shape and the general size of the raw seed with minimal weight gain.

Seed pelleting consists of the application of solid particles that act as a filler (e.g., diatomaceous earth, calcium carbonate, or silica) or bulking agent with a binder or sticking agent to form a more or less spherically shaped dispersal unit. The pelleting process is commonly performed in a coating pan or tumbling drum. Binders or sticking agents can be mixed with water and sprayed onto the seeds, or blended dry with the filler. Coating formulations can be blends of binders or sticking agents and fillers, formulated as dry powders. In an alternating manner, powder is dusted and water sprayed onto seeds during the coating operation. Water temporarily binds the pellet and activates the sticking agent. Pelleting is a wet operation and therefore pellets must be dried at the completion of the coating process.

Binders for use in seed coating compositions are well-known in the art and examples thereof include water-soluble polymers, such as polyvinyl acetate, polyvinyl alcohol, polyvinyl pyrrolidone, polyurethane, methyl cellulose, carboxymethyl cellulose, hydroxylpropyl cellulose, sodium alginate, polyurethane, polyacrylate, casein, gelatin, pullulan, polyacrylamide, polyethylene oxide, polystyrene, styrene acrylic copolymers, styrene butadiene polymers, and poly(N-vinylacetamide). Also waxes such as carnauba wax, paraffin wax, polyethylene wax, bees wax, and polypropylene wax can be used as a binder or as an extra flow additive. Also, ethylene vinyl acetate can suitably be used as a binder.

Film coating of seeds consists of spraying a solution or suspension of film-forming polymer onto seeds to achieve a uniform deposition of materials. Coating pans used for pelleting may also be used; however, in contrast to the wet operation of pelleting, the aqueous film-forming formulation must be dried immediately after spraying to avoid agglomeration.

Both pelleting and film coating can serve as a delivery system for denatonium benzoate and optionally further active agents and/or additives at high-loading rates. In the case of pelleting, the active ingredients, formulated as dry powders, can be applied in the outer pellet layers. Final coating applications with filler material encapsulate the plant protectants and prevent worker exposure to the active ingredients.

In a preferred aspect of the invention, denatonium benzoate is used in an amount of 0.1 to 10 g/50,000 seeds, in particular 0.2 to 5 g/50,000 seeds. In case denatonium benzoate is used as a single active agent, the amount of denatonium benzoate used according to the invention is preferably 0.5 to 1.5 g/50,000 seeds. When denatonium benzoate is used in combination with one or more further active agents, a lower amount of denatonium benzoate may be sufficient, preferably 0.2 to 1 g/50,000 seeds.

Basically, denatonium benzoate may be applied in any form. For example, denatonium benzoate can be used as a solid powder (CAS: 3734-33-6; a.i. = 3500 ppm), in crystalline pure form or as a liquid composition. Preferably, a liquid composition for use according to the invention further comprises one or more sticking agents. In a particular aspect of the invention the liquid composition comprises denatonium benzoate in a concentration of about 1-100 g/l, in particular 10-50 g/l, preferably 13-27 g/l. Additionally, a liquid composition may include one or more further active agents or additives, preferably as described hereinabove. Alternatively or additionally it is possible to apply further active agents in a separate composition to the seed. In this case, the treatment with the additional active agent(s) can take place before or after the treatment with denatonium benzoate or simultaneously.

A still further aspect of the present invention relates to a method for providing a plant protected against damage caused by insects, the method comprising
a) providing a seed as described above or a seed obtained or obtainable according to the method described hereinabove, and
b) growing a plant from the seed of a).

The seed provided in step (a) need not be treated with denatonium benzoate immediately before the method is carried out, but seed may be used which has been treated and then stored at some earlier stage.

The conditions for growing the plant in step b) correspond to the conditions usually applied for cultivation of said plant or plant cultivar. The fact that the seed has been treated with denatonium benzoate does not make any particular demands on the growing conditions. In particular, a seed may be sowed in an agricultural area, where it will sprout, grow and ripen provided that nutrients, water and light are sufficiently available.

Since denatonium benzoate may be at least partially absorbed by the seed, the resulting plant preferably contains denatonium benzoate. This also protects the emerged seedling and the developing plant from insects, in particular wireworms and their larvae. Optionally, the plant may further contain one or more additional active agents and/or additives, in particular those described hereinabove.

The plant may, for example, be a seedling containing denatonium benzoate in a mean concentration of 1 to 50 ppm, preferably 5 to 30 ppm, more preferably 10 to 22 ppm, in the entire seedling; or a seedling containing denatonium benzoate in a mean concentration of 50 to 2500 ppb, preferably 100 to 1500 ppb, more preferably 200 to 800 ppb, in sprout tissue of the seedling; or a plant in the middle-aged development stage (e.g., for corn the stage is V6-V8) containing denatonium benzoate in a mean concentration of 0.5 to 100 ppb, preferably 1 to 50 ppb, more preferably 5 to 20 ppb, in leaf tissue of the seedling. Alternatively, the plant may, for example, be a seedling containing denatonium benzoate in a mean amount of 1 to 40 µg per plant, preferably 2 to 25 µg per plant, more preferably 5 to 15 µg per entire plant, or is a seedling containing denatonium benzoate in a mean amount of 0.01 to 0.5 µg per sprout of the seedling, preferably 0.03 to 0.3 µg per sprout of the seedling, more preferably 0.05 to 0.2 µg per sprout of the seedling.

Under insect infestation conditions, in particular wireworm infestation conditions, seeds and plants according to the invention are protected from damage caused by insects in that they are repelled from the seeds or plants due to denatonium benzoate being present on and/or in the seeds or plants. In an agricultural area these plants will grow better than plants that are grown from untreated seeds.

Thus, a further aspect of the present invention is a method for controlling damage caused by insects on seeds or plants in an agricultural area comprising the following steps:
a) sowing seeds according to the invention or seeds obtained or obtainable according to the method of the invention on an agricultural area, and
b) growing plants from the seeds,
wherein one or both steps a) and b) are performed under conditions of infestation with insects,
wherein the plant stand count on said agricultural area is higher than under the same conditions on a comparable agricultural area with untreated seeds or plants grown from untreated seeds.

The seed sowed in step (a) need not be treated with denatonium benzoate immediately before sowing, but seed may be used which has been treated and then stored at some earlier stage.

The conditions for growing the plant in step b) correspond to those usually applied in cultivation of said plant or said plant cultivar. The fact that the seed has been treated with denatonium benzoate does not make any particular demands on the growing conditions.

*"Stand counts"* analyze the number of plants or crops on a field or a specific area on the field. In a preferred embodiment, the plant stand count on said agricultural area under conditions of infestation with insects is at least 10%, preferably 20% and more preferably at least 30% higher than that obtained under the same conditions on a comparable agricultural area with untreated seeds or plants grown from untreated seeds..

The term *"comparable agricultural area with untreated seeds or plants grown from untreated seeds"* refers to an area where plants are grown under the same conditions (e.g. with regard to soil conditions, light, water, nutrients, etc.), also under infestation with insects, the only difference being that the seeds or plants grown from untreated seeds have not been subjected to any treatment to protect it from insects.

The invention shall be further illustrated by the following figures and examples.

### Figures

- **Fig. 1A**: shows an array of plant pots where four corn seeds have been sown per pot.
- **Fig. 1B**: shows the placing of wireworms of genus *Agriotes* in a central cavity of a plant pot.
- **Fig. 2**: is a bar graph showing the plant biomass for corn plantlets that have developed from differently treated seeds (variants 1-10).
1: negative control (no seed treatment)
2: sticker alone (control)
3, 4: Bitrex
5: RedigoM
6-8: Bitrex and RedigoM
9: RedigoM and Force 20 CS (positive control)
10: RedigoM and Poncho (positive control)
- **Fig. 3:**: is a bar graph showing the assessment of seed damage for corn plantlets that have developed from differently treated seeds (variants 1-10).

### Examples

### 1. Corn seed Treatment.

Denatonium benzoate has been tested in different concentrations ranging from 0.2-5 g/unit [g/u]. Partially denatonium benzoate (trade name: Bitrex) has been applied in combination with standard fungicides such as Redigo M or Maxim XL and/or with standard insecticides such as Force 20 CS and Poncho. In all combinations and variants filmcoats (sticking agents) have been used to provide an even distribution of the different substances to the seed.

In one embodiment, denatonium benzoate is used as a solid powder (CAS: 3734-33-6; a.i. = 3500 ppm) in crystalline pure form. In another embodiment denatonium benzoate powder is mixed with a sticker, preferably before application, and then preferably a concentration ranging from 13.14 g per liter to 26.28 g per liter have been applied.

**Table 1. Exemplary mixture of compounds in a seed treatment:**

| | | | | | |
|---|---|---|---|---|---|
| fungicide | Maxim XL | 12,5 ml/u (13,13 g/u) | Metalaxyl (10 g/l) 0.125 g a.i./u Fludioxonil (25 g/l) 0.313 g a.i./u | 1,05 g/ml | MTL FLU |
| fungicide | RedigoM | 15 ml/u 16.1 g/u | Metalaxyl (20 g/l) 0.30 g a.i./u Prothioconazole (100 g/l) 1.5 g a.i./u | 1.05 g/ml | MTL PRO |
| Repellent | Bitrex | 0,2 - 5 g/u | Denatoniumbenzoat ai = 3500ppm CAS: 3734-33-6 | powder | |
| sticker | Sepiret 9290 red | 30 ml/u (36 g/u) | | 1.20 g/ml | |

In particular, the sticker is selected from Sepiret®, Peridiam® Quality or Peridiam® Active, especially preferred the sticker is selected from Sepiret 9290 red or Peridiam® Quality 316 https://www.seedgrowth.bayer.com/∼/media/d3ed77a4560740d8a568fa06f50129d c.ashx. Other stickers which might be used can be found on https://agriculture.basf.com/en/Crop-Protection/Seed-treatment.html.

The treating process can be based on the rotor / stator principle. The seed is accelerated by a rotating mixing cone and moves to the top of the static cylinder wall. Special bye pass blades on top of the wall guide the rising seed back down to the middle. So, a fine seed curtain is built around the chemical liquid spraying disc. The spraying disc produces a fine fog of chemical liquid which coats the inner seed curtain as well as the ascending seed at the cylinder wall.

### 2. Evaluation of the phytotoxicity

In order to evaluate the phytotoxicity of different corn seed treatments, safety tests were conducted. Germination rates of corn seeds treated with various concentrations of denatonium benzoate (Bitrex®) [in g per unit, where 1 unit is 50.000 seeds] were counted after five days at 25°C. Cold test germination rates (CT) were counted after 7 days at 10°C and 5 days at 25°C. The treatments were compared to untreated seeds. Furthermore, the germination rates of corn seeds treated with denatonium benzoate in combination with further active agents, in particular fungicides, were examined under different environmental conditions. The results are shown in the following Table 2, with
KF = germination rates counted after 5 days at 25°C and
CT = cold test germination rates counted after 7 days at 10°C and 5 days at 25°C.

**Table 2**

| Variety | Chemical | Additiv | slurry ml/u | KF | ΔKF | CT | ΔCT |
|---|---|---|---|---|---|---|---|
| Amavit | no | no | 0 | 98,0% | | 85,5% | |
| Amavit | no | Bitrex 0,2g/u | 150 | 98,0% | 0,0% | 91,5% | 6,0% |
| Amavit | no | Bitrex 0,5g/u | 150 | 96,5% | -1,5% | 89,0% | 3,5% |
| Amavit | no | Bitrex 1,0g/u | 150 | 97,5% | -0,5% | 95,5% | 10,0% |
| Amavit | no | Bitrex 2,0g/u | 150 | 97,0% | -1,0% | 93,0% | 7,5% |
| Amavit | no | Bitrex 5,0g/u | 150 | 98,0% | 0,0% | 96,5% | 11,0% |
| Amavit | RedigoM | no | 150 | 98,0% | | 97,0% | |
| Amavit | RedigoM | Bitrex 0,2g/u | 150 | 100,0% | 2,0% | 97,5% | 0,5% |
| Amavit | RedigoM | Bitrex 0,5g/u | 150 | 97,5% | -0,5% | 99,0% | 2,0% |
| Amavit | RedigoM | Bitrex 1,0g/u | 150 | 96,0% | -2,0% | 99,0% | 2,0% |
| Amavit | RedigoM | Bitrex 2,0g/u | 150 | 96,5% | -1,5% | 95,5% | -1,5% |
| Amavit | RedigoM | Bitrex 5,0g/u | 150 | 99,5% | 1,5% | 96,5% | -0,5% |
| Amavit | MaximXL | no | 150 | 96,5% | | 100,0% | |
| Amavit | MaximXL | Bitrex 0,2g/u | 150 | 98,0% | 1,5% | 98,0% | -2,0% |
| Amavit | MaximXL | Bitrex 0,5g/u | 150 | 98,0% | 1,5% | 98,0% | -2,0% |
| Amavit | MaximXL | Bitrex 1,0g/u | 150 | 96,5% | 0,0% | 97,0% | -3,0% |
| Amavit | MaximXL | Bitrex 2,0g/u | 150 | 95,5% | -1,0% | 99,0% | -1,0% |
| Amavit | MaximXL | Bitrex 5,0g/u | 150 | 97,5% | 1,0% | 99,0% | -1,0% |
| KXB6432 | no | no | 0 | 94,5% | | 92,5% | |
| KXB6432 | no | Bitrex 0,2g/u | 150 | 92,5% | -2,0% | 98,0% | 5,5% |
| KXB6432 | no | Bitrex 0,5g/u | 150 | 96,5% | 2,0% | 97,5% | 5,0% |
| KXB6432 | no | Bitrex 1,0g/u | 150 | 96,5% | 2,0% | 97,0% | 4,5% |
| KXB6432 | no | Bitrex 2,0g/u | 150 | 96,0% | 1,5% | 90,5% | -2,0% |
| KXB6432 | no | Bitrex 5,0g/u | 150 | 95,5% | 1,0% | 90,5% | -2,0% |
| KXB6432 | RedigoM | no | 150 | 94,5% | | 97,5% | |
| KXB6432 | RedigoM | Bitrex 0,2g/u | 150 | 94,5% | 0,0% | 97,0% | -0,5% |
| KXB6432 | RedigoM | Bitrex 0,5g/u | 150 | 95,5% | 1,0% | 96,5% | -1,0% |
| KXB6432 | RedigoM | Bitrex 1,0g/u | 150 | 96,0% | 1,5% | 99,5% | 2,0% |
| KXB6432 | RedigoM | Bitrex 2,0g/u | 150 | 95,5% | 1,0% | 98,5% | 1,0% |
| KXB6432 | RedigoM | Bitrex 5,0g/u | 150 | 97,0% | 2,5% | 96,5% | -1,0% |
| KXB6432 | MaximXL | no | 150 | 98,5% | | 99,0% | |
| KXB6432 | MaximXL | Bitrex 0,2g/u | 150 | 98,5% | 0,0% | 100,0% | 1,0% |
| KXB6432 | MaximXL | Bitrex 0,5g/u | 150 | 99,0% | 0,5% | 99,5% | 0,5% |
| KXB6432 | MaximXL | Bitrex 1,0g/u | 150 | 97,5% | -1,0% | 98,0% | -1,0% |
| KXB6432 | MaximXL | Bitrex 2,0g/u | 150 | 98,0% | -0,5% | 96,5% | -2,5% |
| KXB6432 | MaximXL | Bitrex 5,0g/u | 150 | 97,5% | -1,0% | 99,0% | 0,0% |
| ø | no | no | 0 | 96,3% | | 89,0% | |
| ø | no | Bitrex 0,2g/u | 150 | 95,3% | -1,0% | 94,8% | 5,8% |
| ø | no | Bitrex 0,5g/u | 150 | 96,5% | 0,3% | 93,3% | 4,3% |
| ø | no | Bitrex 1,0g/u | 150 | 97,0% | 0,8% | 96,3% | 7,2% |
| ø | no | Bitrex 2,0g/u | 150 | 96,5% | 0,3% | 91,8% | 2,8% |
| ø | no | Bitrex 5,0g/u | 150 | 96,8% | 0,5% | 93,5% | 4,5% |
| ø | RedigoM | no | 150 | 96,3% | | 97,3% | |
| ø | RedigoM | Bitrex 0,2g/u | 150 | 97,3% | 1,0% | 97,3% | 0,0% |
| ø | RedigoM | Bitrex 0,5g/u | 150 | 96,5% | 0,3% | 97,8% | 0,5% |
| ø | RedigoM | Bitrex 1,0g/u | 150 | 96,0% | -0,2% | 99,3% | 2,0% |
| ø | RedigoM | Bitrex 2,0g/u | 150 | 96,0% | -0,2% | 97,0% | -0,2% |
| ø | RedigoM | Bitrex 5,0g/u | 150 | 98,3% | 2,0% | 96,5% | -0,7% |
| ø | MaximXL | no | 150 | 97,5% | | 99,5% | |
| ø | MaximXL | Bitrex 0,2g/u | 150 | 98,3% | 0,7% | 99,0% | -0,5% |
| ø | MaximXL | Bitrex 0,5g/u | 150 | 98,5% | 1,0% | 98,8% | -0,7% |
| ø | MaximXL | Bitrex 1,0g/u | 150 | 97,0% | -0,5% | 97,5% | -2,0% |
| ø | MaximXL | Bitrex 2,0g/u | 150 | 96,8% | -0,7% | 97,8% | -1,8% |
| ø | MaximXL | Bitrex 5,0g/u | 150 | 97,5% | 0,0% | 99,0% | -0,5% |
| ø | ø | no | 0 | 96,7% | | 95,3% | |
| ø | ø | Bitrex 0,2g/u | 150 | 96,9% | 0,3% | 97,0% | 1,8% |
| ø | ø | Bitrex 0,5g/u | 150 | 97,2% | 0,5% | 96,6% | 1,3% |
| ø | ø | Bitrex 1,0g/u | 150 | 96,7% | 0,0% | 97,7% | 2,4% |
| ø | ø | Bitrex 2,0g/u | 150 | 96,4% | -0,2% | 95,5% | 0,3% |
| ø | ø | Bitrex 5,0g/u | 150 | 97,5% | 0,8% | 96,3% | 1,1% |

### Example 3: Determination of systemic activity of denatonium benzoate

To determine, if denatonium benzoate could be systemic (taken up by the plant), a Liquid Chromatography with tandem mass spectrometry (LC-MS-MS) was performed, which is a powerful analytical technique that combines the separating power of liquid chromatography with the highly sensitive and selective mass analysis capability of triple quadrupole mass spectrometry. Therefore, we used 1) seedlings just after field emergence to determine the content of denatonium benzoate in the complete plant and in the sprout separately (Table 3), as well as 2) middle-aged plants (V6-V8), where the leaves have been investigated (Table 4).

**Table 3. Results of denatonium benzoate determination in seedlings just after field emergence**

| Sample | Description | Weight | Final Conc. | | | µg DNB / plant or sprout |
|---|---|---|---|---|---|---|
| | | mg | mg/g ppm/ µg/g ppb/ ng/g | | | |
| 1 | 5 complete | 3245.54 | 0.009 | 9,047 | 9047.3 | 5.87 |
| 2 | 4 complete | 2726.9 | 0.021 | 20,920 | 20920.4 | 14.26 |
| 3 | 4 sprout | 813.36 | 0.001 | 0,782 | 782.1 | 0.16 |
| 4 | 4 sprout | 1008.56 | 0.000 | 0,231 | 231.5 | 0.06 |

**Table 4. Results of denatonium benzoate determination in middle-aged plants**

| Sample | Description | Weight | Final Conc. |
|---|---|---|---|
| | | mg | ppb/ ng/g |
| 14 DNB 0.8g_P1 | leaves | 3039.6 | 5.49 |
| 14 DNB 0.8g_P2 | | 3098.6 | 5.34 |
| 14 DNB 0.8g_P3 | | 3053.9 | 5.46 |
| 20 DNB 0.4g_P1 | leaves | 3027.6 | 6.61 |
| 20 DNB 0.4g_P2 | | 3022.0 | 20.03 |
| 20 DNB 0.4g_P3 | | 3021.5 | 12.04 |
| 22 DNB 0.4g_P1 | leaves | 3087.0 | 4.74 |
| 22 DNB 0.4g_P2 | | 3072.1 | 17.26 |
| 22 DNB 0.4g_P3 | | 3044.4 | 13.72 |

Denatonium benzoate was taken up by the plant and shows concentration differences between different plant sections/organs and development stadiums:
In early stage denatonium benzoate is selective detectable. The concentration in the complete plant is in the lower ppm range (-10-20 ppm) and in sprouts is in the upper ppb range (-200-800 ppb). The variation in concentration is high (Table 3). In middle-aged corn plants the concentration in leaves is in the lower ppb range (∼5-20 ppb). Variation in concentration differs between type (Inter) and plant (Intra) and concentration of DNB decrease from early stage (200-800 ppb in sprout) to mid stage (5-20 ppb in leaves) significantly.

### Example 4: Evaluation of the efficacy of denatonium benzoate as a repellent for wireworms

The following set up of experimental approaches as shown in Table 5 was applied. The denatonium benzoate (Bitrex) was tested in concentrations of 0.5 g/unit (wherein 1 unit = 50.000 seeds), 1 g/unit and 5 g/unit, either without any other plant protection product (variants 3 and 4) or with RedigoM (active ingredients 100 g/l Prothioconazole (PRO) and 20 g/l Metalaxyl (MTL); (variants 6-8). Sticker was always Sepiret 9290 red, whereby 30 ml/unit has been applied. Variant 1 is the negative control wherein no treatment of the seeds took place, variant 2 is another control only treated with the sticker. Variant 5 is RedigoM and sticker without Bitrex. Variants 9 and 10 serve as positive control. Beside RedigoM and the sticker, the seeds have been treated with either with Force 20 CS (active ingredient: tefluthrin (TEF); or with Poncho® 600 (active ingredient: clothianidin (CLO). Both Force 20 CS and Poncho® 600 are standard treatments against wireworm infestation. All testing were conducted on corn variety Amavit of KWS SAAT SE & Co. KGaA.

**Table 5: Set for wireworm repellent testing.**

| Variant | Thousand kernel mass (g/1tk) | Plant protection product | active compound | additive | sticker |
|---|---|---|---|---|---|
| 1 | 293 | none | none | none | none |
| 2 | 293 | none | none | none | Seperit 9290 red 30ml |
| 3 | 293 | none | none | Bitrex 0.5 g/u | Seperit 9290 red 30ml |
| 4 | 293 | none | none | Bitrex 1 g/u | Seperit 9290 red 30ml |
| 5 | 293 | RedigoM | MTL; PRO | none | Seperit 9290 red 30ml |
| 6 | 293 | RedigoM | MTL; PRO | Bitrex 0.5 g/u | Seperit 9290 red 30ml |
| 7 | 293 | RedigoM | MTL; PRO | Bitrex 1 g/u | Seperit 9290 red 30ml |
| 8 | 293 | RedigoM | MTL; PRO | Bitrex 5 g/u | Seperit 9290 red 30ml |
| 9 | 293 | RedigoM Force 20 CS | MTL; PRO TEF | none | Seperit 9290 red 30ml |
| 10 | 293 | RedigoM Poncho | MTL; PRO CLO | none | Seperit 9290 red 30ml |

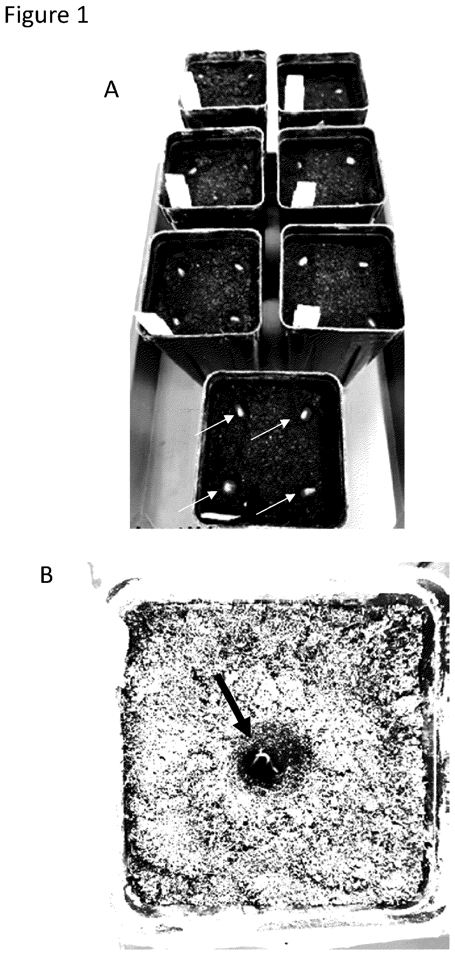

Testing took place in pot assays. Per pot four corn seeds were sown (see Fig. 1A). In each pot four wireworm of genus *Agriotes* were placed in a central cavity of 5 cm depth (see Fig. 1B). Each treatment variant 1-10 was replicated seven times. The seeds in the pots were germinated and seedlings were grown under controlled conditions in greenhouse.

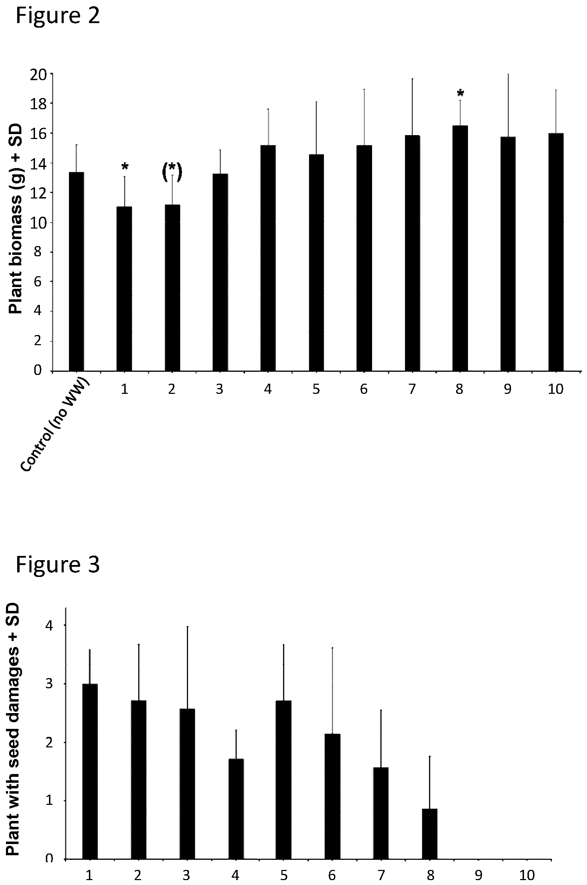

Eight days after sowing the plant biomass (Fig. 2) as well as seed damage (Fig. 3) were assessed. Treatment with Bitrex had a positive effect on the development of biomass. Plantlets without treatment of plant protection product(s) (variants 1 and 2) suffered infestation and showed slower early plant development. The treatment only with the sticker Seperit 9290 red (variant 2) has no effect on plant development. Plantlets treated with Bitrex showed comparable or even more biomass than control plants without wireworm infestations ('control (no WW)') and comparable with variants 9 and 10 treated with the standard plant protection products Force 20 CS and Poncho.

The seed damages and seedling damages, preferably on the roots, that were evaluated are significantly reduced if Bitrex has been applied. Non-treated seed (variant 1) showed damages on average on 3 seeds out of the four sown seeds per pot (mean damage: 75%). As positive control Force 20 CS and Poncho showed no seed damage at all (mean damage: 0%). Application of Bitrex, in particular in concentrations higher than 1 g/unit, significantly increased the tolerance towards wireworms (see variant 4, 7 and 8). The seed damage could be reduced to a mean of 21.5% in variant 8 (corresponding to on average 0.86 damaged seeds out of four seeds per pot).

## Claims

1. Seed, treated with denatonium benzoate, wherein the denatonium benzoate is adsorbed on the seed and/or absorbed into the seed.

2. The seed according to claim 1, wherein the seed is coated with denatonium benzoate, optionally in combination with one or more further active agents and/or additives.

3. The seed according to claim 2, wherein the further active agents are selected from phytochemicals and antimicrobial agents, in particular bactericides, antiparasitics and fungicides, such as DSM RD9103 BRP, chili extract, black cumin oil, yucca extract, mentha pulegium extract, aluminium ammonium sulfate, hops extract, fat encapsulated plant extracts, alginate encapsulated plant extracts, tefluthrin, yellow colour substance, SatecWFO20, metalaxyl, fludioxonil, prothioconazole, and combinations thereof, preferably Redigo M and/or Maxim XL, and/or
wherein the additives comprise sticking agents, preferably water-based sticking agents such as Sepiret®, Peridiam® Quality or Peridiam® Active.

4. The seed according to any one of the preceding claims, wherein denatonium benzoate is present in an amount effective to provide protection against damage caused by insects, in particular wireworms.

5. The seed according to any one of the preceding claims, wherein the germination capacity of the seed is essentially the same as for untreated seed.

6. A plant or a part thereof grown from the seed according to anyone of claims 1 to 5, in particular wherein the plant or a part thereof contains denatonium benzoate, and optionally in addition one or more further active agents and/or additives, preferably as defined in claim 3.

7. The plant or a part thereof according to claim 6, wherein the plant is
i) a seedling and contains denatonium benzoate in a mean concentration of 1 to 50 ppm, preferably 5 to 30 ppm, more preferably 10 to 22 ppm, in the entire seedling; or
ii) a seedling and contains denatonium benzoate in a mean concentration of 50 to 2500 ppb, preferably 100 to 1500 ppb, more preferably 200 to 800 ppb, in sprout tissue of the seedling; or
iii) a plant in middle-aged development stage and contains denatonium benzoate in a mean concentration of 0.5 to 100 ppb, preferably 1 to 50 ppb, more preferably 5 to 20 ppb, in leaf tissue of the seedling.

8. Use of denatonium benzoate for protecting seed or plant, preferably a seedling, from damage caused by insects, optionally in combination with one or more further active agents and/or additives, preferably as defined in claim 3.

9. Method of protecting a seed against damage caused by insects, the method comprising contacting the seed with denatonium benzoate, optionally in combination with one or more further active agents and/or additives, preferably as defined in claim 3.

10. The method according to claim 9, wherein denatonium benzoate is used in an amount of 0.1-5 g per 50,000 seeds, in particular 0.2-2 g per 50,000 seeds, preferably 0.2-0.6 g per 50,000 seeds when used in combination with further active agents and 0.5-1.5 g per 50,000 seeds when used as a single active agent.

11. The method according to claim 9 or 10, wherein denatonium benzoate is used as a solid powder in crystalline pure form or as a liquid composition further comprising a sticking agent.

12. The method according to claim 11, wherein the liquid composition comprises denatonium benzoate in a concentration of about 1-100 g/L, in particular 10-50 g/L, preferably 13-27 g/L.

13. A method of providing a plant protected against damage caused by insects, the method comprising
a) providing a seed according to any one of claims 1-5 or a seed obtained or obtainable according to the method of any one of claims 9-12, and
b) growing a plant from the seed of a).

14. The method according to claim 13, wherein the plant in step b) is a plant according to claim 6 or 7.

15. Method for controlling damage caused by insects on seeds or plants in an agricultural area, comprising the following steps:
a) sowing seeds according to any one of claims 1-5 or seeds obtained or obtainable according to the method of any one of claims 9-12 on an agricultural area, and
b) growing plants from the seeds,
wherein one or both steps a) and b) are performed under conditions of infestation with insects and insect larvae;
wherein the plant stand count on said agricultural area is higher than under the same conditions on a comparable agricultural area with untreated seeds or plants grown from untreated seeds,
in particular wherein the plant stand count on said agricultural area is at least 10%, preferably at least 20% and more preferably at least 30% higher than on a comparable agricultural area with untreated seeds or plants grown from untreated seeds.
